# EUROPEAN PATENT SPECIFICATION

(11) **EP 1 978 831 B1**
(45) Date of publication and mention of the grant of the patent: **29.04.2020**
(21) Application number: 07704112.7
(22) Date of filing: 24.01.2007
(51) Int. Cl.: A23L 27/00, A23L 29/00

(54) **A BOUILLON AND/OR SEASONING TABLET CONTAINING CEREAL, VEGETABLE AND/OR FRUIT FIBERS**
BOUILLON- UND/ODER WÜRZENTABLETTE
COMPRIMÉ DE BOUILLON ET/OU ÉPICES

(30) Priority: 24.01.2006 EP 06001417
(43) Date of publication of application: 15.10.2008
(73) Proprietor: Société des Produits Nestlé S.A., 1800 Vevey (CH)
(72) Inventor: KEHLENBECK, Volker, 78247 Hilzingen (DE); PALZER, Stefan, Chalet a Gobet - 1000 Lausanne (CH)
(74) Representative: Mollet, Beat Max
(86) International application number: PCT/EP2007/050680
(87) International publication number: WO 2007/085609

(56) References cited:
- EP-A- 0 764 407
- EP-A- 0 888 723
- EP-A- 1 269 863
- WO-A-98/12934
- WO-A-2004/049831
- WO-A-2006/063690
- CA-A1- 2 441 956
- FR-A- 446 340
- US-A- 2 278 466
- US-A- 3 666 491
- US-A1- 2003 175 400
- US-A1- 2004 151 806
- "Tabletting spicy vegetable materials, esp. garlic - by heating, pressing to separate oil and groats, mixing oil with salt, drying, combining oil-salt mixt. with groats, tabletting and heating" DERWENT, 10 March 1980 (1980-03-10), XP002248274 & SU 719 593 A1 (MO T I PISHCHEVOJ PROMY [SU]) 5 March 1980 (1980-03-05)
- PALACIOS L E ET AL: "Egg-yolk lipid fractionation and lecithin characterization.", JOURNAL OF THE AMERICAN OIL CHEMISTS' SOCIETY 2005 CORRESPONDENCE (REPRINT) ADDRESS, TONG WANG, DEP. OF FOOD SCI. & HUMAN NUTR., CENT. FOR CROPS UTILIZATION RES., IOWA STATE UNIV., AMES, IA 50011-1061 , vol. 82, no. 8 2005, pages 571-578, Retrieved from the Internet: URL:http://www.springerlink.com/content/jx 41087096720252/fulltext.pdf

## Description

The present invention concerns a bouillon and/or seasoning tablet containing cereal, vegetable and/or fruit fibers, as well as a process for the production of said tablets.

The normal way to produce a bouillon and/or seasoning tablet is to homogenize the ingredients of the recipe in a mixer using a certain sequence. Water is often an integral part of the recipe. During this operation, some crust formation occurs in said mixer, which provokes afterwards some obligation of stopping the mixer to clean intensively. Sometimes also lumps occur in the produced mixtures. By the tabletting being carried out after, the presence of lumps in the produced mass causes weight variations of the produced tablets and as a consequence variations of the tablet hardness. In addition, the water is not distributed homogenously so that there are hardness variations within the tablet structure. Lumps in the tablets cause problems during the dissolution of said tablets even in hot water. The solubility of said tablets is often not satisfying for the consumer.

In the patent WO 2004/049831 A1, a hard bouillon tablet or cube, which comprises liquid oil and possibly solid fat, crystals, fillers, sticking agents as well as optionally spices, flavors, dehydrated vegetables, herb leaves and/or plant extracts are protected.

The addition of cereal, vegetable or fruit fibres is not mentioned. The tablets or cubes according to the patent WO 2004/049831 A1 have the disadvantage of a long dissolution time and a possible oiling out during storage. The process necessary to produce the bouillon masses, which are later pressed in a tablet or cube, has the disadvantage that a significant encrustation of the mixing device occurs, the produced mass often contains lumps and the water activity of the mass might vary during storage.

All the mentioned disadvantages can be reduced or even avoided by using cereal, vegetable or fruit fibres. The cereal, vegetable or fruit fibres are pre-wetted in a separate step with a saturated water/salt solution.

The objective of the present invention is to produce a tablet, wherein there is no more crust formation in the mixer and wherein there are no more lumps in the produced mass as well as in the final tablets. This result is achieved preferably by adding prewetted cereal, vegetable and/or fruit fibers to a mixture of all the ingredients. Preferably, the fibers are added at the end of the mixing procedure. However, the fibres can also be added during earlier mixing steps accepting a higher risk of encrustation of the mixing equipment.

The present invention concerns a process for the production of bouillon and/or seasoning tablet and/or cube, which comprises, in total % in weight, 0.5-10 % oil and/or 0-5 % fat, binders, salt, between 1 and 5 % of total water, and between 0.5 and 8 % of cereal, vegetable and/or fruit fibers, wherein the fibres are wetted with a saturated salt solution by spraying said saturated solution on the fibres, the wetted fibres are then mixed with all the other ingredients and the obtained mixture is tabletted. The product according to the invention contains optionally It is clear that the dehydrated vegetables inherently contain already a certain amount of fibers. In the tablet of the invention, the amount of dehydrated vegetables does not exceed normally 5 % in weight. According to the invention we add in the recipe for preparing the tablet the above mentioned amount of fibers: this part is added and not inherently present. The fibers concerned are obtained from the concerned vegetables, cereals or fruits, by any mechanical, thermal and/or chemical procedure, like dehulling, milling, sieving and drying. These fibers have different sorption isotherms than the dehydrated vegetables (different water release). They are available on the market, e.g. from COSUCRA, Herbafood and Microfood.

The expression tablet in the present description means "tablet or cube obtained by pressing a bouillon or seasoning powder, preferably a free flowing powder, into a tablet or cube form".

The expression "oil" means "oil or mixture of oils which is liquid at room temperature and which more especially has a solid fat content (SFC) of less than 5 % at 20°C".

The expression binders means "the addition of ingredients which (combined with an adequate increase of the water activity, aw value) be subject to a glass transition and support as a consequence the binding".

The cereal, vegetable and fruit fibers contain up to 90 % of cellulose. Preferably, these fibers contain more than 50 % of cellulose. Most preferably, these fibers contain between 65 % and 80 % of cellulose.

There is no limitation in the choice of the fibers used. But, preferably these fibers are obtained from oat, wheat, rice, cassava, tomato, potato, pea, sugar beat, carrot, citrus and apple fibers.

According to the invention, the fat and oil content of the tablet is comprised between 0.5 and 15 % in weight. Preferably, there is a minimum of fat in the tablet, which means from the whole fat and oil content, there is less than 50 % of fat. Preferably, the fat content is of less than 40 %.

There is no limitation in the choice of the oil. Preferably, the oil is taken from the group consisting of sunflower oil, olive oil, corn oil, canola oil, palm oil (non-hydrogenated or hydrogenated) or palmolein.

The taste enhancer present can be Mono-Sodium Glutamate and/or yeast extract.

With the new recipe structure according to the invention, it is possible to produce a tablet or cube having a better solubility in water. In hot water the dissolution of a vegetable bouillon tablet according to the invention (10.5 g) containing carrot fibers took about 60 s. The dissolution of a comparable tablet without carrot fibers took about 100 s. The dissolution was measured with an ERWEKA ZT71.

With the new recipe structure according to the invention, it is possible to reduce/avoid the oiling-out of produced tablets or cubes. For a vegetable bouillon tablet according to the invention, containing carrot fibers, no separation of oil on the packaging material was noticed visually. Using the same storage conditions and the same composition but without carrot fibres, a significant separation of oil on the packaging material was noticed visually.

With the new recipe structure according to the invention, it is necessary to declare the addition of fibres on the packaging. Preferably, the term vegetable fibres is used in the ingredient list.

With the new recipe structure according to the invention, it is possible to produce bouillon and/or seasoning masses having a more constant water activity with time. Preferably, the water activity does not drop more than 0.01 (measured with a rotronic HygroPalm or HygroLab) between the 2^{nd} and 21^{st} day after production. As a consequence the water activity of freshly produced tablets or cubes behaves in the same manner.

The binders are taken from the group consisting of dextrose syrup, maltodextrin, citric acid, meat extract and processed flavors. Processed flavors are flavors obtained by reaction which are containing major amounts of amorphous substances and which are thus showing a glass transition temperature.

The tablet of the invention can also comprise sodium chloride, Monosodiumglutamate (MSG) and/or sugar.

The spices can be any type of spices. For example, pepper, curry, ginger, paprika, cloves and nutmeg are used. The flavors used are common top, middle and base notes.

The dehydrated vegetables are any type of vegetables, for example tomato, onion, paprika, leek, garlic and carrot pieces or powders.

As herb leaves, e.g. oregano, thyme, tarragon, rosemary, chervil, parsley, chive and coriander are preferably used.

Finally, concerning the plant extracts, e.g. lovage, oregano, nutmeg, laurel, pepper, paprika, chili and onion extract are introduced in the mixture.

The present invention concerns furthermore the process for the production of the above described bouillon and/or seasoning masses, wherein the fibres are wetted with a saturated water/salt solution by spraying said saturated solution on the fibres. Preferably, the wetting takes place in a low shear or a high shear mixer. The wetted fibres are then mixed with all the other ingredients and the obtained mixture is tabletted. At least a short storage of a few hours is required to allow the fibres to exchange water with the other components of the mix.

The saturated salt solution contains preferably about 20 to 35 % in weight of salt. The salt used is preferably sodium chloride. For sodium chloride, the saturated solution contains preferably about 25 to 28 % in weight of salt. But every other food grade salt which decreases the water activity of the solution below 0.8 can be used. For sodium chloride, the water activity of the used solution is preferably between 0.72 and 0.8.

### Example 1:

A pre-mix of wetted wheat fibers is produced by spraying a saturated water/salt solution (about 36 g sodium chloride per 100 g water) on carrot fibers. The wetting takes place in a low shear or a high shear mixer. The mixer can be continuous or discontinuous.

To produce the bouillon or seasoning mass, the ingredients of the recipe as for example (in total percent in weight) about 42 % sodium chloride, about 15 % of mono sodium glutamate, about 2.3 % sunflower oil, about 20 % of maltodextrin as well as different vegetable pieces and herb leaves, spices and flavors are mixed in a low shear or a high shear mixer. Afterwards, about 3 % of the pre-mix containing the wetted carrot fibers is added to the bouillon or seasoning mass and the mixing continuous or starts again.

### Example 2:

A pre-mix of wetted oat fibers is produced by spraying a saturated water/salt solution (about 36 g sodium chloride per 100 g water) on oat fibers. The wetting takes place in a low shear or a high shear mixer. The mixer can be continuous or discontinuous.

To produce the bouillon or seasoning mass, the ingredients of the recipe as for example (in total percent in weight) about 43 % sodium chloride, about 16 % of mono sodium glutamate, about 5 % olive oil, about 24 % of maltodextrin as well as different vegetable pieces and herb leaves, spices and flavors are mixed in a low shear or a high shear mixer. Afterwards, about 3 % of the pre-mix containing the wetted oat fibers is added to the bouillon or seasoning mass and the mixing continuous or starts again.

## Claims

1. A process for the production of a bouillon and/or seasoning tablet and/or cube, which comprises, in total % in weight, 0.5-10 % oil, and/or 0-5 % fat, binders, salt, between 1 and 5 % of total water, as well as between 0.5 and 8 % of cereal, vegetable and/or fruit fibers, as well as optionally sugar, spices, flavors, taste enhancers, dehydrated vegetables, herb leaves and/or plant extracts, wherein the fibres are wetted with a saturated salt solution by spraying said saturated solution on the fibres, the wetted fibres are then mixed with all the other ingredients and the obtained mixture is tabletted.

2. A process according to claim 1, wherein the fibers contain up to 90 % of cellulose.

3. A process according to claims 1 or 2, wherein the fibers are taken from the group consisting of oat, wheat, rice, cassava, tomato, potato, pea, sugar beet, carrot, citrus and apple fibers.

4. A process according to any of claims 1 to 3, wherein the content of fat and oil is comprised, in total % in weight, between 1 and 15 %.

5. A process according to claim 4, wherein the content of the fat is lower than 50 % of the total fat and oil content.

6. A process according to any of claims 1 to 5, wherein the oil is selected from the group consisting of sunflower oil, olive oil, corn oil, canola oil, palm oil (non-hydrogenated or hydrogenated) and or palmolein.

7. A process according to any of claims 1 to 6, wherein the binders are taken from the group consisting of maltodextrin, citric acid, meat extract, and processed flavors.

8. A process according to any of claims 1 to 7, wherein the bouillon and/or seasoning tablet and/or cube contains monosodium glutamate and/or sugar.

9. A process according to any of claims 1 to 8, wherein the saturated salt solution contains about 20 to 35 % in weight of salt.

10. A process according to any of claims 1 to 9, wherein the salt is sodium chloride.

11. A process according to any of claims 1 to 10, wherein the salt solution contains 25 to 28 % in weight of sodium chloride.

## Patentansprüche

1. Verfahren zur Herstellung einer Bouillon- und/oder Würztablette und/oder eines Würzwürfels, der, in Gesamtgew.-%, zu 0,5-10 % Öl, und/oder zu 0-5 % Fett, Bindemittel, Salz, zu zwischen 1 und 5 % des gesamten Wassergehalts, sowie zu zwischen 0,5 und 8 % Getreide-, Gemüse- und/oder Obstfasern, sowie gegebenenfalls Zucker, Gewürze, Aromen, Geschmacksverstärker, dehydratisierte Gemüse-, Kräuterblätter-und/oder Pflanzenextrakte umfasst, wobei die Fasern mit einer gesättigten Salzlösung angefeuchtet werden, indem die gesättigte Lösung auf die Fasern gesprüht wird, die angefeuchteten Fasern dann mit allen anderen Inhaltsstoffen gemischt werden und die erhaltene Mischung tablettiert wird.

2. Verfahren nach Anspruch 1, wobei die Fasern bis zu 90 % Zellulose enthalten.

3. Verfahren nach einem der Ansprüche 1 oder 2, wobei die Fasern aus der Gruppe stammen, bestehend aus Hafer, Weizen, Reis, Maniok, Tomate, Kartoffel, Erbsen, Zuckerrüben, Karotten, Zitrus- und Apfelfasern.

4. Verfahren nach einem der Ansprüche 1 bis 3, wobei der Gehalt an Fett und Öl in Gesamtgew.-% zu zwischen 1 und 15 % liegt.

5. Verfahren nach Anspruch 4, wobei der Gehalt des Fetts niedriger als 50 % des gesamten Fett- und Ölgehalts ist.

6. Verfahren nach einem der Ansprüche 1 bis 5, wobei das Öl aus der Gruppe, bestehend aus Sonnenblumenöl, Olivenöl, Maisöl, Canolaöl, Palmöl (ungehärtet oder gehärtet) und/oder Palmolein ausgewählt ist.

7. Verfahren nach einem der Ansprüche 1 bis 6, wobei die Bindemittel der Gruppe, bestehend aus Maltodextrin, Zitronensäure, Fleischextrakt und verarbeiteten Aromen, entnommen werden.

8. Verfahren nach einem der Ansprüche 1 bis 7, wobei die Bouillon- und/oder Würztablette und/oder der Würzwürfel Mononatriumglutamat und/oder Zucker enthält.

9. Verfahren nach einem der Ansprüche 1 bis 8, wobei die gesättigte Salzlösung zu etwa 20 bis 35 Gew.-% Salz enthält.

10. Verfahren nach einem der Ansprüche 1 bis 9, wobei das Salz Natriumchlorid ist.

11. Verfahren nach einem der Ansprüche 1 bis 10, wobei die Salzlösung zu 25 bis 28 Gew.-% Natriumchlorid enthält.

## Revendications

1. Procédé de production d'une tablette et/ou d'un cube de bouillon et/ou d'assaisonnement, qui comprend, en % du poids total, 0,5 à 10 % d'huile, et/ou 0 à 5 % de matière grasse, des liants, du sel, entre 1 et 5 % d'eau totale, ainsi qu'entre 0,5 et 8 % de fibres de céréales, de légumes et/ou de fruits, ainsi que, facultativement, du sucre, des épices, des arômes, des exhausteurs de goût, des légumes déshydratés, des extraits de feuilles d'herbes et/ou de plantes, les fibres étant mouillées avec une solution saline saturée par pulvérisation de ladite solution saturée sur les fibres, les fibres mouillées étant ensuite mélangées avec tous les autres ingrédients et le mélange obtenu étant compressé en tablettes.

2. Procédé selon la revendication 1, dans lequel les fibres contiennent jusqu'à 90 % de cellulose.

3. Procédé selon les revendications 1 ou 2, dans lequel les fibres sont choisies dans le groupe constitué de fibres d'avoine, de blé, de riz, de manioc, de tomate, de pomme de terre, de pois, de betterave sucrière, de carotte, de citron et de pomme.

4. Procédé selon l'une quelconque des revendications 1 à 3, dans lequel la teneur en matière grasse et en huile est comprise, en % du poids total, entre 1 et 15 %.

5. Procédé selon la revendication 4, dans lequel la teneur en matière grasse est inférieure à 50 % de la teneur totale en matière grasse et huile.

6. Procédé selon l'une quelconque des revendications 1 à 5, dans lequel l'huile est choisie dans le groupe constitué d'huile de tournesol, huile d'olive, huile de maïs, huile de canola, huile de palme (non hydrogénée ou hydrogénée) et ou oléine de palme.

7. Procédé selon l'une quelconque des revendications 1 à 6, dans lequel les liants sont choisis dans le groupe constitué de maltodextrine, acide citrique, extrait de viande et arômes traités.

8. Procédé selon l'une quelconque des revendications 1 à 7, dans lequel la tablette et/ou le cube de bouillon et/ou d'assaisonnement contient du glutamate monosodique et/ou du sucre.

9. Procédé selon l'une quelconque des revendications 1 à 8, dans lequel la solution saline saturée contient environ 20 à 35 % en poids de sel.

10. Procédé selon l'une quelconque des revendications 1 à 9, dans lequel le sel est le chlorure de sodium.

11. Procédé selon l'une quelconque des revendications 1 à 10, dans lequel la solution saline contient 25 à 28 % en poids de chlorure de sodium.
